# EUROPÄISCHE PATENTSCHRIFT

(11) **EP 1 014 510 B1**
(45) Veröffentlichungstag und Bekanntmachung des Hinweises auf die Patenterteilung: **14.11.2001**
(21) Anmeldenummer: 99124895.6
(22) Anmeldetag: 17.12.1999
(51) Int. Cl.: H01R 13/64, H01M 2/20, H01R 13/00, H01R 13/645

(54) **Kombinierte Lade- und Fluid-/Gas-Steckvorrichtung**
Combined charge and fluid/gas connection device
Dispositif de connexion électrique et fluide/gaz combiné

(30) Priorität: 21.12.1998 DE 29822726 U
(43) Veröffentlichungstag der Anmeldung: 28.06.2000
(73) Patentinhaber: REMA Lipprandt GmbH & Co. KG, D-53175 Bonn (DE)
(72) Erfinder: Standke, Kurt, Dr., 53175 Bonn (DE); Krupp, Willi, 53639 Königswinter-Ittenbach (DE); Glück, Ralf, 53175 Bonn (DE)
(74) Vertreter: Koch, Theodor, Dipl.-Phys.

(56) Entgegenhaltungen:
- EP-A- 0 622 859
- EP-A- 0 821 444
- DE-U- 9 304 925

## Beschreibung

Die Erfindung betrifft eine kombinierte Lade- und Fluid-/Gas-Steckvorrichtung, insbesondere zum Anschließen eines Akkumulators mit Elektrolytumwälzung an eine Strom-und eine Fluidversorgungseinheit, gemäß Oberbegriff des Anspruches 1.

Eine derartige Steckvorrichtung ist gemäß der europäischen Offenlegungsschrift EP 0 821 444 A2 bekannt.

Diese betrifft dabei eine leichte, kompakte, mehrpolige Steckvorrichtung und zwei Steckverbinder dafür, zum Anschluß von Akkumulatoren an Elektro-Flurförderzeuge oder Ladegeräte,
insbesondere solche, welche einen Elektroanschluß und einen Fluid-/ Luftanschluß für ein Fluid- oder Drucklufttransportsystem aufweisen, wobei es möglich ist, die Steckverbinder trotz Anlage der Fluid-/Luft-Kupplungsteile mit herkömmlichen Geräte-Steckvorrichtungen nach DIN-Norm, insbesondere nach der DIN-Norm 43589-1, welche keine Fluid-/Luft-Kupplungsteile aufweisen, zu überstecken.

Die Fluid-/Gas-Kupplungsteile und Leitungen sind dabei weitgehend innerhalb der Gehäuse der Steckvorrichtung angelegt, wobei deren buchsen- und stiftförmige Anschlüsse gänzlich innerhalb des Steckansatzes gelegen sind oder nur bis in den Schutzkragen des Steckverbinders ragen und dabei dort seitlich neben den Haupt- und Pilotkontakten sich zusätzlich erstrecken.
Die Fluid-/Gas-Kupplungsteile sind dabei leicht entfernbar, so daß ein Nachrüsten einer Steckvorrichtung mit diesen sowie auch eine einfache Reparatur oder ein Austausch der Fluid-/Gas-Kupplungsteile gegen zusätzliche Pilotkontakte möglich ist.

Nachteilig ist dabei, daß die mögliche Größe der Leitungsdurchmesser der Fluid-/Gas-Kupplungsteile aufgrund der gemäß DIN geforderten Bestückung mit elektrischen Kontaktelementen und Abmessung der Steckverbinder, insbesondere des Schutzkragens und des Steckansatzes, beschränkt ist. In der EP 0 821 444 A2 ist insofern lediglich eine einzige Fluidleitung vorgesehen, welche sich zum Steckgesicht der Verbinder sogar in zwei Leitungsstücke mit geringerem Durchmesser verzweigt. Des weiteren weisen die Steckverbinder lediglich Hauptkontakte für 2-Phasen auf.

Ausgehend von einer kombinierten Lade- und Fluid-/Gas-Steckvorrichtung der eingangs genannten Art besteht daher die Aufgabe der vorliegenden Neuerung, eine leichte, kompakte, mehrpolige Lade- und Fluid-/Gas-Steckvorrichtung zu schaffen, insbesondere eine Batterie-Steckdose und einen Lade- oder Fahrzeug-Stecker dafür, mit einem Elektroanschluß und mit einem Fluid-/Gasanschluß, insbesondere zum Anschluß von Batterien an eine Ladestation mit einem Fluid- oder Drucklufttransportsystem und einer Fluid- oder Druckluftversorgung zur Batteriewartung, wobei entsprechende Steckverbinder mit Steckverbindern gemäß DIN 43589-1 übersteckbar sind und integrierte Fluid-/Gas-Kupplungsteile aufweisen. Es soll sich dabei aber gegenüber Steckverbindern gemäß der EP 08 21 444 A2 auf Grund der möglichen Anlage zusätzlicher Fluid-/bzw. Gas-Luftleitungen oder zusätzlicher Hauptkontakte ein erhöhter Verwendungsbereich ergeben.

Zur Lösung dieser Aufgabe ist eine kombinierte Lade- und Fluid-/Gas-Steckvorrichtung gemäß Anspruch 1 vorgesehen.

Im Gegensatz zu einer zweipoligen Geräte-Steckvorrichtung mit Buchsen- und Stiftkontakten gemäß DIN 43589-1 weist die erfindungsgemäße Lade- und Fluid-/Gas-Steckvorrichtung Steckverbinder auf, welche jeweils ein einseitig seitlich derart verbreitetes Gehäuse aufweisen, daß ein Gehäuseabschnitt mit zusätzlicher Aufnahme gegeben ist, in welcher jeweils ein Buchsenkontakt oder ein Stiftkontakt eines dritten Hauptkontaktes aufgenommen oder auch alternativ ein zusätzliches Fluid-/Gas-Kupplungsteil aufnehmbar ist.

Das Gehäuse der Steckdose weist insofern einen Steckansatz auf, welcher einen ersten Steckansatzabschnitt gemäß DIN 43589-1 aufweist, welcher zwei Buchsenkontakte umgibt, sowie einen von diesem Abschnitt getrennten, zusätzlichen zweiten Steckansatzabschnitt zur Aufnahme eines dritten Buchsenkontaktes.

Das Gehäuse des Steckers ist dabei entsprechend seitlich verbreitert, was insbesondere für den Bereich des Schutzkragens gilt. Dieser weist dabei zwei Abschnitte auf, von dem ein erster Schutzkragenabschnitt mit seiner Steckansatzaufnahme gemäß Norm für Elektro-Flurförderzeuge ausgebildet ist und zur Aufnahme von zwei parallelen Stiftkontakten dient.

Dieser Abschnitt geht seitlich mit seiner Außenwandung unmittelbar in die Außenwandung des von diesem ansonsten getrennten äußeren zweiten Abschnittes des Schutzkragens zur Lagerung eines zusätzlichen Stiftkontaktes über. Diese Schutzkragenabschnitte sind dabei derart mit Kontakten bestückt und bemessen, daß die Außenkonturen der zwei Steckansatzabschnitte in gestecktem Zustand von Steckdose und Stecker in den von den beiden Schutzkragenabschnitten gebildeten Steckansatzaufnahmen eingreifen und dort kontaktiert werden.

Der Steckansatz der Steckdose weist in seinem ersten Steckansatzabschnitt zwei Aufnahmeräume auf, wobei in diesen insofern elektrisch getrennt voneinander zwei Buchsenkontakte für unterschiedliche elektrische Phasen eingebracht und mit ihrem Endabschnitt in dem sich vom Steckansatz nach hinten anschließenden Kontaktaufnahmeteil festgelegt sind.

Zu diesen beiden Aufnahmeräumen ist dabei ein in dem zusätzlichen zweiten Steckansatzabschnitt angelegter dritter Aufnahmeraum parallel geführt, wobei in diesen ein vorzugsweise gleich großer dritter Buchsenkontakt parallel zu den anderen Buchsenkontakten auswechselbar angeordnet ist und dabei wie die beiden ersten Buchsenkontakte in dem sich an den Steckansatz anschließende Kontaktaufnahmeteil festlegbar ist.

Es ist insofern möglich, an einer Steckvorrichtung aus derart ausgebildeten Steckverbindern Leitungen von 3Phasen anzuschließen, beispielsweise zwei positive Phasen und eine negative Phase.

Dadurch das der zweite Steckansatzabschnitt seitlich zu dem ersten Steckansatzabschnitt getrennt und parallel zu diesen angeordnet ist, ist es möglich, den ersten Steckansatzabschnitt auch außen weitgehend gemäß den Steckansätzen von Batterie-Steckdosen gemäß DIN für Elektroflurförderzeuge auszubilden, wobei dies für die Ausbildung des Steckansatzabschnittes über seinen gesamten Umfang und Länge gilt.

Der erste Steckansatzabschnitt kann insofern wie auch der erste Schutzkragenabschnitt des Schutzkragens des Steckers mit zwei Haupt- und zwei Pilotkontakten und Aufnahmen dafür gemäß Norm für Elektroflurförderzeuge versehen werden sowie auch mit zusätzlichen Fluid-/Luft-Kupplungsteilen gemäß dem zweipoligen Steckansatz der BatterieSteckdose der EP 0 821 444 A2. Ferner können auch statt der zusätzlichen Fluid-/Luft-Kupplungsteile in dem Steckansatz weitere Pilotkontakte eingebracht werden.

Es ist insofern eine unterschiedliche Ausrüstung der vorliegenden Steckvorrichtung als kombinierte Lade- und Fluid-/Gas-Steckvorrichtung mit elektrischen Kontaktelementen und zusätzlichen Fluid-/Gas-Kupplungsteilen möglich, so daß neben unterschiedlicher elektrischer Verbindungen auch unterschiedliche Luft- bzw. Gas- und Fluidkupplungen herstellbar sind.

Gemäß Anspruch 4 weist insofern vorzugsweise sowohl die Steckdose über ihren ersten Steckansatzabschnitt als auch der Stecker über den ersten Bereich seines Schutzkragens Abmessungen gemäß DIN 43589-1 für Elektroflurförderzeuge und ein entsprechendes Steckgesicht auf, wobei gleichzeitig eine Ausbildung des Steckgesichtes und des Gehäuses mit zusätzlichen Aufnahmen für Pilotkontakte und/oder Luft- bzw. Gas- und Fluid-Kupplungsteile gemäß den Steckverbindern der EP 0 821 444 A2 gegeben ist.

Um nun eine Kompatibilität zwischen den erfindungsgemäßen Steckvorrichtungen mit seitlich breiterem Gehäuse zur Aufnahme eines dritten Hauptkontaktes und den Steckvorrichtungen mit einem kleineren Gehäuse zur Aufnahme von zwei Hauptkontakten gemäß DIN 43589-1 bzw. der EP 0 821 444 A2 zu erreichen, ist gemäß Anspruch 2 vorgesehen, daß der erste Steckansatzabschnitt der Steckdose zu dem äußeren seitlich von diesem getrennten Steckansatzabschnitt derart weit entsprechend der äußeren Abmessung des Schutzkragens eines Steckers für Elektroflurförderzeuge mit lediglich zwei parallelen Stiftkontakten beabstandet ist, daß eine zusätzliche Übersteckung mit einer derartigen Steckvorrichtung bzw. deren schmalerem Schutzkragen möglich ist.

Im Gegensatz zu den insofern seitlich beabstandeten, getrennten zwei Steckansatzabschnitten der Steckdose wird der Schutzkragen eines Steckers aus einem nach außen in sich geschlossenen einzigen Abschnitt gebildet.

Es sind dabei aber im Innern des Schutzkragens selber zwei verschiedene Bereiche gegeben, welche zur Übersteckung mit den beiden voneinander getrennten Steckansatzabschnitten zwei getrennte Steckansatzaufnahmen bilden.

Diese beiden Bereiche des Schutzkragens sind aber seitlich bezüglich ihrer Außenwandung unmittelbar miteinander durch einen gemeinsamen Wandungsbereich verbunden, wobei dieser aber als Trennwand für zwei insofern nebeneinander liegende, nicht ineinander übergehende Steckansatzaufnahmen ausgebildet ist. Die Stärke der Trennwand ist zumindest etwas kleiner als der Abstand der beiden Steckansatzabschnitte gemäß Anspruch 2 ausgeführt.

In diese Steckansatzaufnahmen ragen beim Überstecken maximal drei anlegbare Stiftkontakte, welche in dem sich am Schutzkragen anschließenden Kontaktaufnahmeteil des Steckers in drei verschiedenen Aufnahmeräumen gelagert sind und sich mit ihrem äußeren Steckabschnitt in den Schutzkragen erstrecken.

Der dritte Hauptkontakt wird insofern beim Überstecken zum einen im Schutzkragen des Steckers durch die Anlage von zwei getrennten Steckansatzaufnahmen und in dessen Kontaktaufnahmeteil durch einen zusätzlichen dritten Aufnahmeraum, sowie zum anderen im Steckansatz und in dem Kontaktaufnahmeteil der Steckdose durch einen weiteren zusätzlichen Aufnahmeraum von den beiden gemäß Norm vorgesehenen seitlichen Hauptkontakten weitgehend getrennt.

Dies stellt dabei einen besonderen Vorteil dar, sofern statt oder zusätzlich zu dem gemäß Anspruch 6 bis 13 gemäß der EP 0 821 444 A2 anzulegenden Luft- bzw. Fluid-Kupplungsteil ein zusätzliches Gas- oder Fluid-Kupplungsteil, insbesondere für Wasser, gemäß Anspruch 14 vorzusehen ist. Dies zusätzliche Fluid-Kupplungsteil in der Steckdose und dem Stecker ist statt des dort einbringbaren zusätzlichen dritten Hauptkontaktes einbringbar.

Es weist eine derartige Länge und eine in seiner Wandung derart angelegte und nach außen sich öffnende Eingriffshinterschneidung auf, daß es dort mit einem Verschlußteil und einer Arretierplatte festlegbar ist, welche auch zur Festlegung der übrigen drei Hauptkontakte sowie der übrigen Pilotkontakte und Fluid-Kupplungsteile dienen.

Vorteilhafte Ausbildungen dieses Fluid-/Gas-Kupplungsteils ergeben sich dabei aus den Ansprüchen 15 - 19, wobei insbesondere vorteilhafte Halterungen, Dichtungen und die Anlage von Sperrventilen zum Verschließen des Ausgangs dieser Kupplungsteile vorgesehen sind, sofern Flüssigkeiten in ihnen anstehen oder über sie zu leiten sind.

Die erfindungsgemäße kombinierte Lade- und Fluid-/Gas-Steckvorrichtung wird im folgenden anhand einer bevorzugten Ausführungsform erläutert.

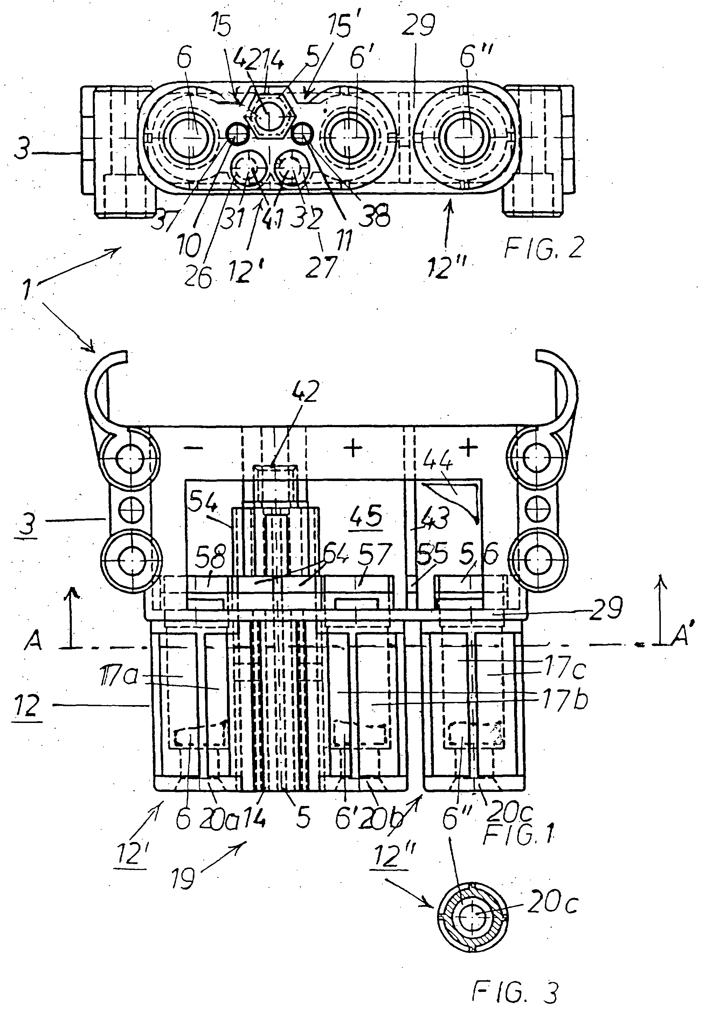

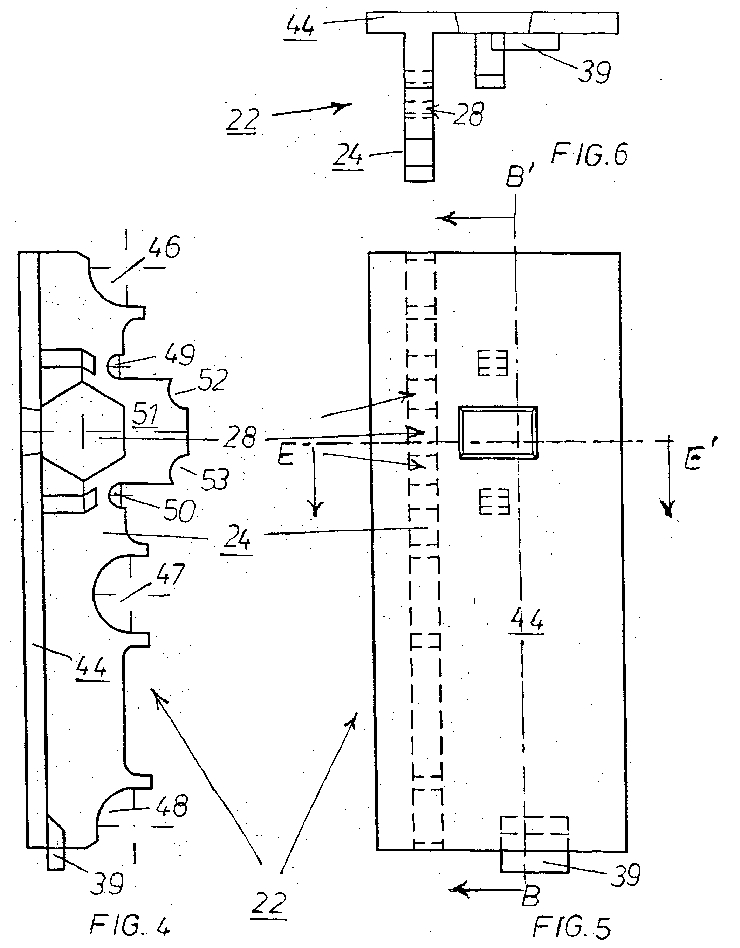

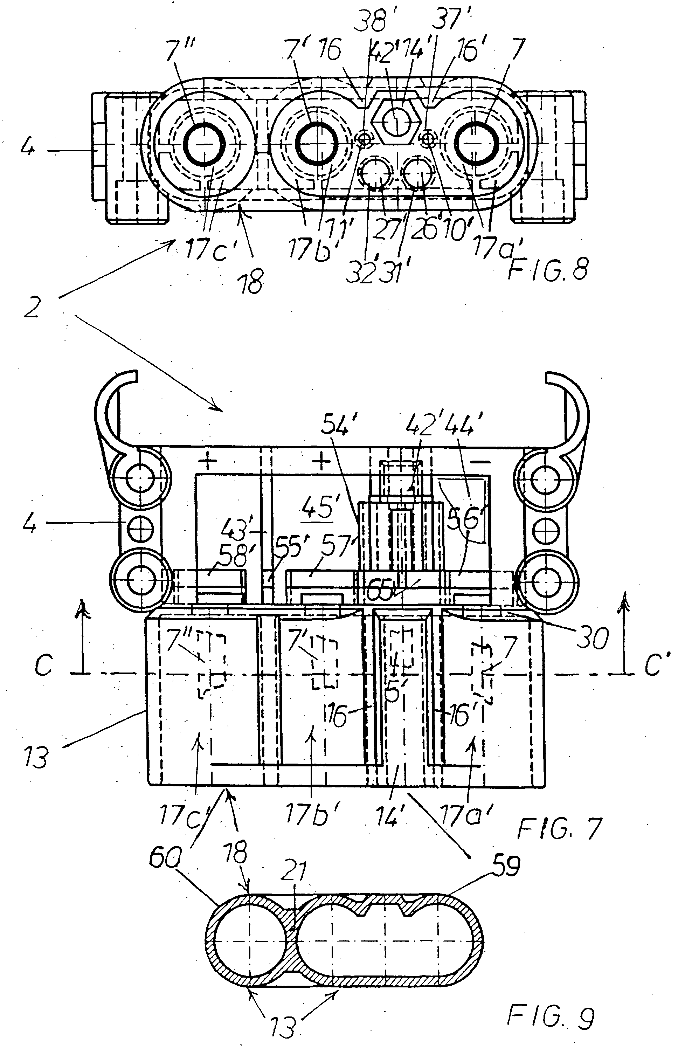

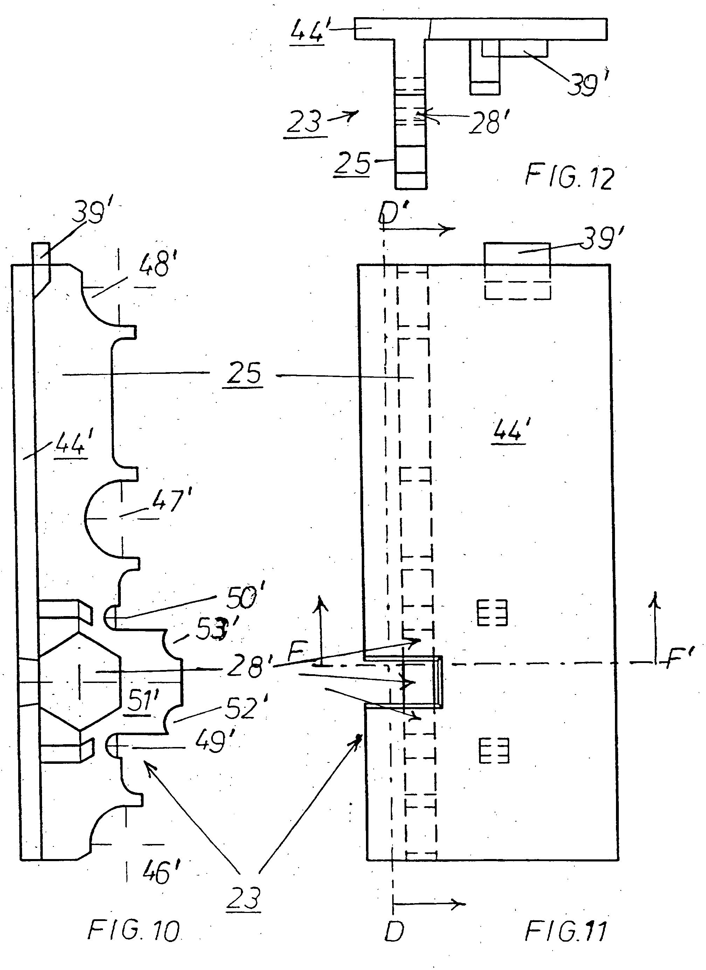

In den Zeichnungen zeigen:
Figur 1
   Eine Draufsicht auf die Oberseite einer sowohl zur elektrischen Verbindung als auch für eine Fluid-/Gas-Kupplung dienenden 3-poligen Steckdose mit drei in dessen Steckansatz ragenden Buchsenkontakten, wobei in die Oberseite des Steckdosengehäuses ein Verschlußteil mit äußerer Trägerplatte zur Arretierung der Kontaktelemente und Fluid-/Gas-Kupplungsteile eingelassen ist.
Figur 2
   Eine Querschnittsansicht entsprechend einer Schnittlinie A-A' durch den Steckansatz der Steckdose gemäß Figur 1 unter Darstellung der Buchsen- und Pilotkontakte und Durchgangsbohrungen zur Lagerung zweier Fluid-/Gas-Kupplungsteile und eines Codierstiftes;
Figur 3
   Eine Querschnittsansicht durch den seitlichen zusätzlichen Steckansatzabschnitt zur Aufnahme eines einzigen Buchsenkontaktes oder eines dritten Fluid-/Gas-Kupplungsteils, wobei dieser parallel seitlich zu dem gemeinsamen Steckansatzabschnitt der beiden parallel geführten, gemäß Norm angelegten Buchsenkontakte geführt ist;
Figur 4
   Eine Querschnittsansicht entlang der Längsseite des Verschlußteils einer Steckdose gemäß Figur 1, 2, welche aber entlang der auf der halben Breite des Verschlußteils geführten Schnittlinie BB' nach Figur 5 verläuft;
Figur 5
   Eine Draufsicht auf die äußere Trägerplatte des in Figur 4 dargestellten Verschlußteils mit verdeckter, an dessen Unterseite senkrecht abstehender Arretierplatte;
Figur 6
   Eine Querschnittsansicht entlang der Schnittlinie EE' über die Schmalseite des Verschlußteils der Figur 4 und 5, gesehen auf deren äußere Arretierplatte, die Trägerplatte und einen am Ende davon abstehenden Arretiersteg;
Figur 7
   Eine Draufsicht auf die Oberseite eines 3-poligen Steckers, welcher mit der Steckdose gemäß Figur 1 übersteckbar ist, wobei in dessen Gehäuse das Verschlußteil mit der äußeren Trägerplatte zur Arretierung der aus zwei oder wie hier drei Stiftkontakten bestehenden Hauptkontakte, zweier Pilotkontaktstifte, eines Codierstiftes und zweier Fluid-/Gas-Kupplungsteile eingesetzt und festgeklipst ist;
Figur 8
   Eine Querschnittsansicht durch den Schutzkragen in Richtung Führung der Zugentlastungsschelle entlang der Schnittlinie CC' der Figur 7;
Figur 9
   Eine Querschnittsansicht durch den bloßen Schutzkragen unter Draufsicht auf den Übergangs zum restlichen Steckergehäuse entlang der Schnittlinie CC' der Figur 7;
Figur 10
   Eine Querschnittsansicht entlang der Längsseite des Verschlußteils eines Steckers gemäß Figur 7, 8 gemäß einer seitlich entlang der Längsseite des Verschlußteils geführten Schnittlinie DD' nach Figur 11;
Figur 11
   Eine Draufsicht auf die äußere Trägerplatte des Verschlußteils der Figur 10 mit der von dessen Unterseite seitlich senkrecht abstehenden Arretierplatte;
Figur 12
   Eine Querschnittsansicht entlang der Schnittlinie FF' über die Schmalseite des Verschlußteils der Figur 10 und 11, gesehen auf deren äußere Arretierplatte, die Trägerplatte und einen am Ende davon abstehenden Arretiersteg;
Figur 13
   Eine Darstellung zweier unterschiedlicher zu verwendender Fluid-/Gas-Kupplungsteile der Steckdose.
Figur 14
   Eine Darstellung der zu verwendenden entsprechenden Fluid-/Gas-Kupplungsteile des Steckers.
Figur 15
   Die Darstellung der Anordnung jeweils eines Sperrventils in den gegenüberliegenden zu übersteckenden Fluid-/Gas-Kupplungsteilen von Stecker und Steckdose, durch welche das Austreten von Wasser aus einem an einer Batterie anzuschließenden Ladegerät und vom Flüssigkeit aus dieser Batterie verhindert wird.

Die Zeichnungen zeigen eine Steckvorrichtung für Elektro-Flurförderzeuge bestehend aus einer Steckdose (1) und einem Stecker (2).

Die Steckvorrichtung dient dabei beidseits zum Anschluß von zwei oder drei elektrischen Leitungen von zwei oder drei Hauptkontakten sowie von ein oder zwei Fluid-/Gas-Leitungen sowie vorzugsweise zum Anschluß von zwei zusätzlichen elektrischen Leitungen für als Hilfskontakte dienende, jeweils zusätzliche Pilotkontakte.

Die Steckdose (1) gemäß Figur 1 und 2 weist dabei ein Kontaktaufnahmeteil (3) in der oberen Hälfte mit einer Führung für eine Zugentlastungsschelle sowie mit einem sich von diesem nach vorne erstreckenden Steckansatz (12) auf.

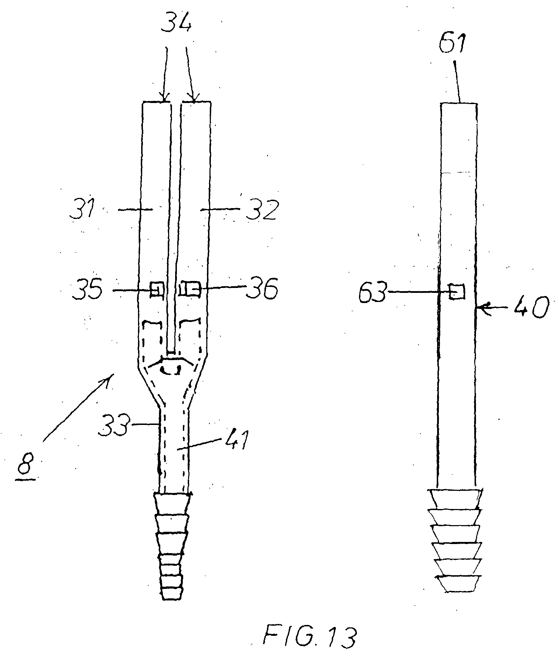

Der Steckansatz (12) besteht dabei aus zwei Steckansatzabschnitten (12', 12"), nämlich aus einem linken größeren Abschnitt (12') mit zwei Aufnahmeräume (17a,17b) für zwei dort parallel zueinander anzuordnende Buchsenkontakte (6,6') und aus einem dritten seitlich außerhalb separat davon angelegten zweiten Abschnitt (12"). Dieser weist einen seitlich zu den Aufnahmeräumen (17a, 17b) parallel verlaufenden dritten Aufnahmeraum (17c) auf, in welchem wahlweise ein dritter Buchsenkontakt (6") der Hauptkontakte oder ein Fluid-/Gas-Kupplungsteil (40) einbringbar ist (siehe Figur 13).

Zur Stirnseite des Steckansatzes (12) sind drei Öffnungen (20a,b,c) angelegt, welche jeweils zu einem der drei Aufnahmeräume (17a,b,c) führen.

Über diese Öffnungen 20a,b,c erfolgt das Kontaktieren der zwei bzw. drei Buchsenkontakte (6,6',6") der Steckdose (1) sofern diese mit den Stiftkontakten (7,7',7") des Stekkers (2) übersteckt werden.

In Figur 1 sind die Buchsenkontakte (6,6',6") nur mit ihrem vorderen Ende schematisch im Bereich zu den dort sich erstreckenden Öffnungen (20a,b,c) wiedergegeben.

Es ist ferner dort der sich in Steckrichtung erstreckende Codierstift (5) der Steckdose schematisch dargestellt, welcher gemäß der Querschnittsansicht der Figur 2 mittig oberhalb der beiden Aufnahmeräume (17a,b) des linken Steckansatzabschnittes (12') zu liegen kommt.

Zur Lagerung des Codierstiftes (5) ist eine Längsaufnahme (14) im Steckansatz (12) angelegt, welche eine sechseckige Querschnittsöffnung bildet und somit den ebenfalls einen sechseckigen Außenquerschnitt besitzenden Halteabschnittes des Codierstiftes (5) gegen eine Drehung festlegt.

Der Codierstift (5) ist mit seinem rückwertigen Halteabschnitt in Figur 2 in Strichelung angedeutet, wobei er durch einen Schnappmechanismus in einer Öffnung (42) im Bereich des Kontaktaufnahmeteils (3) festlegbar ist.

Die Ausbildung des ersten Steckansatzabschnittes (12') mit der Anlage der Buchsenkontakte (6,6') sowie der Aufnahmeräume (17a,b) dafür sowie die Lagerung und Führung dieser Hauptkontakte im Steckansatz (12) sowie im Kontaktaufnahmeteil (3) entspricht der Norm für Geräte-Steckvorrichtungen gemäß DIN 43589, wobei gleiches für die Anlage und Aufnahme der Pilotkontakthülsen (10,11) sowie deren Längsaufnahmen (37,38) gilt.

Diese Pilotkontakte sind jeweils zwischen dem Codierstift (5) und den Buchsenkontakten (6, 6') angelegt.

Der erste Steckansatzabschnitt (12') ist im übrigen auch gemäß weiterer Merkmale des Steckansatzes der Steckdose gemäß der EP 0 821 444 A2 ausgebildet.

Er weist insofern zwei zusätzliche untere Längsaufnahmen (26,27) zur Einbringung des Fluid-/Gas-Kupplungsteils (8) auf.

Dies Fluid-/Gas-Kupplungsteil (8) ist dabei gemäß Figur 13 ausgebildet, wobei zwei parallele Rohrstücke (31,32), welche in die Längsaufnahmen (26,27) gesteckt werden, in ein bloßes mittiges Rohrstück übergehen, welches bis in Richtung Zugentlastungsschelle zu liegen kommt.

Sämtliche elektrische Kontaktelemente, also die Buchsenkontakte (6,6',6") sowie die Pilotkontakte (10,11) sowie das Fluid-/Gas-Kupplungsteil (8) und ein anstelle des Buchsenkontaktes (6") einbringbares Fluid-/Gas-Kupplungsteil (40) werden durch ein Verschlußteil (22) mit einer senkrecht nach unten davon abstehenden Arretierplatte (24) festgelegt.

Die Einbringung des Verschlußteils (22) erfolgt über eine rechteckige Öffnung, welche auf einer der Außenseiten des Kontaktaufnahmeteils (3) angelegt ist.

Die Ausbildung dieses Verschlußteils (22) ist in Figur 4, 5 und 6 wiedergegeben.

Das Verschlußteil (22) ist im Gegensatz zu dem bei der Steckdose gemäß der EP 0 821 444 A2 verwendeten Verschlußteil länger ausgebildet, wobei dies auch für die auf der Oberseite des Kontaktaufnahmeteils (3) gelegene rechteckige Öffnung gilt.

Insofern kann durch dieses Verschlußteil gleichzeitig eine Festlegung des in dem Aufnahmeraum (17c) des zweiten Steckansatzabschnittes (12") eingebrachten Buchsenkontaktes (6") bzw. des dort alternativ gelagerten Fluid-/Gas-Kupplungsteils (40) erfolgen.

Die Beabstandung des zusätzlichen Abschnittes (12") des Steckansatzes (12) gegenüber dem ersten Abschnitt (12') dieses Steckansatzes erfolgt derart, daß der erste Steckansatzabschnitt (12') alternativ auch mit dem Stecker einer Geräte-Steckvorrichtung für Elektro-Flurförderzeuge gemäß DIN 43589 bzw. gemäß der EP 0 821 444 A2 übersteckbar ist.

Ferner muß eine Übersteckung mit einem Stecker (2) gemäß Figur 8 - 10 gewährleistet sein, wobei das Kontaktaufnahmeteil (4) des Steckers (2) einen Schutzkragen (13) aufweist, welcher außer der Anlage von zwei Stiftkontakten (7,7') gemäß Norm vorzugsweise einen dritten Stiftkontakt (7") aufweist oder ein anstelle dieses Kontaktelementes benötigtes zusätzliches Fluid-/Gas-Kupplungsteil (40').

Es ist beim Stecker (2) ein erster und zweiter Bereich des Schutzkragens (13) mit zwei speziell ausgebildeten Steckansatzaufnahmen vorgesehen, wie im einzelnen zu Figur 7, 8, 9 beschrieben ist.

Die Aufnahmeräume (17a,b,c) sowohl im Bereich des linken Steckabschnittes (12') als auch des rechten Steckabschnittes (12") sind jeweils getrennt voneinander ausgebildet.

Über den Bereich des Kontaktaufnahmeteils (3) der Steckdose sind die beiden Aufnahmeräume (17a,b) durch einen Gehäuseabschnitt (54) zur Lagerung des Halteabschnittes des Codierstiftes (5) sowie zur Führung zweier paralleler Rohrstücke (31,32) des Fluid-/Gas-Kupplungsteils (8) voneinander getrennt. Ferner durch Abschnitte der von der Außenwandung des Verschlußteils (22) senkrecht nach unten führenden, in die Auslassung (45) einzusetzenden Arretierplatte (24) (siehe Figur 1,4, 5, 6).

Der Aufnahmeraum (17c) ist dabei von dem benachbarten Aufnahmeraum (17b) des ersten Steckansatzabschnittes (12") durch eine sich längs des Kontaktaufnahmeteils (3) erstreckende Wandung (43) getrennt.

Die Aufnahmeräume (17a,b,c) gehen erst am äußeren Ende des Kontaktaufnahmeteils (3) im Bereich der Zugentlastung ineinander über, wo die elektrischen Anschlußleitungen in Verbindung mit den Buchsenkontakten eingeführt werden.

Aufgrund der Trennung des Aufnahmeraumes (17c) von den beiden benachbarten Aufnahmeräumen (17a,b) ist dieser insofern besonders geeignet, in einem alternativen Fluid-/Gas-Kupplungsteil (40) Wasser oder Batterieflüssigkeit zu führen, welche nicht in Kontakt mit den übrigen elektrischen Kontaktelementen, insbesondere nicht mit den Buchsenkontakten (6,6'), treten dürfen.

In der Querschnittsansicht gemäß Figur 3 ist die Ausbildung der Wandung des zusätzlichen Steckansatzabschnittes (12") gezeigt, wobei diese durch den quer schraffierten kreisförmigen Wandungsteil wiedergegeben ist.

Die Querschnittsansicht erfolgt nach vorn in Richtung zum Anfang des Steckansatzes (12), also zur dortigen Stirnseite mit der dort gelegenen kreisförmigen Öffnung (20c) zum Anbringen eines Stiftkontaktes (7") des Steckers (2) bzw. des zusätzlichen Fluid-/Gas-Kupplungsteils (40') des Steckers.

Außerhalb des schraffierten runden Wandungsteils erkennt man den außen radial vorstehenden Kragen der Stirnseite des zusätzlichen äußeren Steckansatzabschnittes (12").

Der Aufbau des Verschlußteils (22) zur Festlegung der elektrischen Kontaktelemente sowie der Fluid-/Gas-Kupplungsteile innerhalb des Kontaktaufnahmeteils (3) ergibt sich aus den Figuren 4, 5 und 6.

Das Verschlußteil weist eine rechteckige Lagerplatte (44) auf, welche in einer Auslassung (45) an der Gehäuseoberseite des Kontaktaufnahmeteils (3) festlegbar ist.

In die Auslassung (45) ragt das Verschlußteil (22) mit der nach unten abstehenden Arretierplatten (24). An der Unterkante der Arretierplatte (24) sind halbkreisförmige bzw. einen Winkel von 90° überspannende Auslassungen (46,47,48) angelegt, wobei Wandungsabschnitte gebildet werden, mit welchen in den Buchsenkontakten umlaufende Eingriffsnuten in herkömmlicherweise hintergreifbar und festlegbar sind.

Entsprechende halbkreisförmige Aufnahmen (49,50) sind zur Halterung der Pilotkontakthülsen (10,11) angelegt.

Die Halterung des Fluid-/Gas-Kupplungsteils (8) erfolgt über einen nach außen vorstehenden Ansatz (51) der Arretierplatte (24), wobei dieser seitlich rechts und links wiederum halbkreisförmige Ausnehmungen (52,53) aufweist, welche einen Krümmungsradius entsprechend der im Querschnitt kreisförmigen Rohrstücke (31,32) des Fluid-/Gas-Kupplungsteils (8) aufweisen und in Hinterschneidungen dieser Fluid-/Gas-Kupplungsteile eingreifen.

Zur Halterung des Verschlußteils (22) in der Auslassung (45) dient zum einen ein gemäß Figur 4, 5 und 6 über den äußeren Rand in Längsrichtung vorstehender Arretiersteg (39), welcher im Bereich unterhalb der Lagerplatte (44) angelegt ist und somit die Wandung des Kontaktaufnahmeteils (3) im Bereich der Auslassung (45) hintergreift, sowie zum anderen über eine zusätzliche Öffnung (28) innerhalb des Ansatzes (51), durch welche der Codierstift (5) bei eingesetztem Verschlußteil geschoben wird und dann in einer Öffnung (42) des an der Rückseite des Kontaktaufnahmeteils (3) vorgesehenen Gehäuseabschnittes zu verschnappen ist.

In der Längswandung (43) zwischen den beiden Aufhahmeräumen (17b,c) im Bereich des Kontaktaufnahmeteils (3) ist gemäß Figur 1 eine Öffnung (55) angelegt. Auf deren Höhe befindet sich jeweils rechts und links ein unterer halbkreisförmiger radial zur Zugentlastungsschelle über die Breite der Eingriffsnut vorstehender Haltekranz (56,57,58).

In diesen Haltekränzen greifen jeweils die Abschnitte der Arretierplatte (24) zur Halterung der Buchsenkontakte mit einem nach unten vorstehenden Ansatz ein.

Die Ausbildung der Pilotkontakthülsen (10,11) sowie gegebenenfalls zusätzlich vorzusehender Pilotkontakthülsen, welche mit einem Adapter in die zusätzlichen Aufnahmen (26,27) für die Fluid-/Gas-Kupplungsteile festlegbar sind, ist dabei in den vorliegenden Zeichnungen nicht dargestellt.

Diese Ausbildung entspricht der der Kontakte und Adapter gemäß der EP 0 821 444 A2.

Der Stecker (2), der in Figur 7 bzw. 8 in einer Draufsicht auf seine Außenseite mit der Auslassung (45') für das Verschlußteil (23) bzw. in einer Querschnittsansicht durch den Schutzkragen (13) entlang der Schnittlinie CC' der Figur 7 in Richtung auf die Führung der Zugentlastungsschelle dargestellt ist,
weist einen unteren Schutzkragen (13) für die zwei oder drei dort anzubringenden Stiftkontakte (7, 7', 7") auf. Im Gegensatz zum Steckansatz (12) der Steckdose (1) besteht der Schutzkragen (13) aus einem einzigen seitlich zusammenhängenden Wandungsbereich. Gemäß Figur 9 ist aber ein größerer Schutzkragenabschnitt mit einem in sich geschlossenen, eine Steckansatzaufnahme gemäß DIN 43589 bildenden Bereich (59) gegeben, wobei in diese Steckansatzaufnahme zwei Stiftkontakte (7, 7') ragen, und zur Aufnahme des dritten Stiftkontakts (7") ein zweiter in sich geschlossener Bereich (60) eines zweiten Schutzkragenabschnittes vorgesehen ist. Dieser Bereich (60) schließt sich seitlich unmittelbar neben dem ersten Bereich (59) an. Die seitlich innen angrenzenden Wandungsstücke dieser Bereiche gehen dabei ineinander über, wobei sie eine gemeinsame Trennwand (21) für beide Bereiche (59, 60) bilden.

Die Stärke der Trennwand (21) entspricht dem Abstand der beiden Steckansatzabschnitte (12, 12") der Steckdose (1). Da ferner der zweite Bereich (60) des Schutzkragens (13) im Inneren eine Steckansatzaufnahme mit einer zylinderförmigen Kontur und Größe entsprechend dem zweiten Steckansatzabschnitt (12") der Steckdose aufweist, sind dieser Steckansatzabschnitt (12") und die Steckansatzaufnahme des Bereichs (60) und auch der erste Steckansatzabschnitt (12') gemäß Norm und die Steckansatzaufnahme des ersten, gemäß Norm ausgebildeten Bereichs (59) des Schutzkragens übersteckbar.

Statt des dritten Stiftkontaktes (7") kann unter Verzicht auf die Anlage eines dritten Hauptkontaktes der Steckvorrichtung die Anlage eines dritten Fluid-/Gas-Kupplungsteils (40') in dem Stecker (2) erfolgen.

Ansonsten entspricht die Anlage und Ausbildung des Bereiches (59) des Schutzkragens (13) und der dort oder in dem Bereich (60) aufzunehmenden Stiftkontakte (7, 7', 7"), der Pilotkontaktstifte (10', 11'), des Kodierstiftes (5') und des Fluid-/Gas-Kupplungsteils (9) sowie möglicher zusätzlicher Pilotkontakte, welche statt des Fluid-/Gas-Kupplungsteils (9) eingebaut werden, sowie die Lagerung und im wesentlichen auch die Arretierung dieser Teile der DIN 43589 bzw. der Ausbildung einer Geräte-Steckvorrichtung gem. der EP 0 821 444 A2.

Das in den Figuren 10, 11 und 12 dargestellte Verschlußteil (23) entspricht dem Verschlußteil (22) der Steckdose (1).

Der Stecker (2) weist auf seiner Oberseite die rechteckige Auslassung (45') entsprechend der Auslassung (45) der Steckdose auf. In dieser Auslassung (45') ist das Verschlußteil (23) mit der nach unten senkrecht ragenden Arretierplatte (25) festlegbar, wobei hierzu wiederum ein dort in eine Ausnehmung (28') einzubringender Kodierstift (5') sowie ein seitlich vorragender, unterhalb der Lagerplatte (44') des Verschlußteiles ragender Arretiersteg (39') dient.

Die Arretierplatte (25) weist wie die Arretierplatte (24) der Steckdose (1) halbkreisförmige oder sich in einem Winkelbereich von 90° erstreckende Ausnehmungen auf, welche mit ihren Wandungsbereichen oder vorstehenden Stegen in umlaufende Eingriffsnuten der Befestigungshülsen der Stiftkontakte (7, 7', 7") greifen. Diese Auslassungen sind mit den entsprechenden Bezugsziffern (46', 47', 48', 49', 50', 52', 53') wie bei der Arretierplatte (24) gekennzeichnet. Des weiteren ist ein dem Ansatz (51) entsprechender Ansatz (51') gegeben. Der Abstand der Auslassungen (47, 48) bzw. (47', 48') entspricht dem Abstand des Buchsenkontaktes (6") von dem Buchsenkontakt (6') bzw. dem Abstand des Stiftkontaktes (7") vom dem Stiftkontakt (7'). Das Verschlußteil (23) ist insofern wie auch das Verschlußteil (22) gegenüber dem bei der Geräte-Steckvorrichtung gem. der EP 0 821 444 A2 verwendeten Verschlußteil seitlich verlängert, so daß eine Halterung der dritten Hauptkontakte bzw. des dritten Fluid-/Gas-Kupplungsteiles erfolgen kann.

Der Kontaktaufnahmeteil (4) des Steckers (2) ist seitlich einseitig entsprechend verbreitert, wobei der den dritten Stiftkontakt aufnehmende Teil gegenüber dem die beiden übrigen Teile aufnehmenden Teil wie bei der Steckdose (1) durch eine Längswand (43') abgegrenzt ist. Des weiteren sind entsprechend den haltekranzförmigen Auflagerungen (56, 57 und 58) entsprechende Auflagerungen (56', 57', 58') gebildet. In der Längswand (43') ist eine entsprechende Öffnung (55') eingelassen, so daß durch diese die Arretierplatte (25) gegen die Auflagerungen (56', 57' und 58') einrastbar ist.

Das in Figur 13 dargestellte Fluid-/Gas-Kupplungsteil (8) der Steckdose (1) besteht aus zwei parallelen Rohrstücken (31, 32), welche in dieser eingesetzt im geringen Abstand zueinander in Richtung des Steckansatzes (12) laufen und von der geöffneten Seite des Kontaktaufnahmeteiles (3) eingesteckt werden. Die Rohrstücke (31, 32) gehen unter Bildung einer Y-förmigen Abwinkelung ineinander über und laufen über ein Rohrstück (33) bis in Richtung Zugentlastungsschelle. Über Eingriffsöffnungen (35,36) an der Oberseite der Rohrstücke (33, 33') ist das Fluid-/Gas-Kupplungsteil (8) in der Steckdose mittels der Arretierplatte (24) des Verschlußteiles (22) festlegbar.

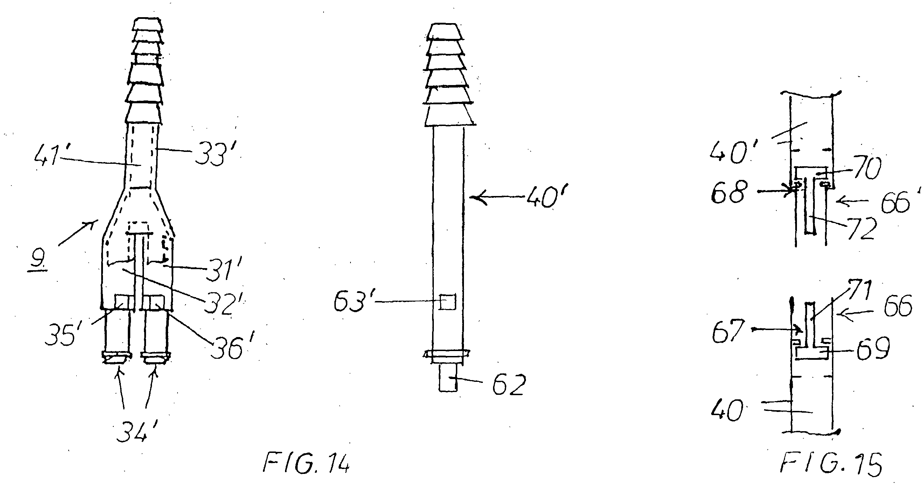

Die Rohrstücke (31, 32) sind an ihrem oberen Ende hülsenförmig ausgebildet, wobei insofern stiftförmig gem. Fig. 14 ausgebildete Rohrstücke (31', 32') eines Fluid-/Gas-Kupplungsteils (9) des Steckers (3) in diese hülsenförmigen Enden einsteckbar sind und mittels Rohrdichtungen unter Bildung einer Fluid-/Gas-Kupplung abdichtbar sind.

Das Fluid-/Gas-Kupplungsteil (9) weist ebenfalls Eingriffsausnehmungen (35', 36') auf, mittels der sie über die in dem Stecker zur Wirkung kommende Arretierplatte (25) festlegbar sind.

Die Fluid-/Gas-Kupplungsteile (8, 9) sowie die zusätzlichen alternativen Fluid-/Gas-Kupplungsteile (40, 40') sind starr und aus einem gegen Elektrolytflüssigkeit beständigen Kunststoffmaterial (Polycarbonat) hergestellt, so daß leicht in die rohrförmig oder als Längsbohrung ausgebildeten Längsaufnahmen (26, 27) bzw. (26', 27') einsteckbare und untereinander übersteckbare längliche Kunststoffteile gegeben sind.

Diese leichte Handhabung wird durch die Anlage und die Y-förmige Abwinkelung der in die zusätzlichen unteren Gehäuseaufnahmen (26, 27) bzw. (26', 27') einsteckbaren zwei Rohrstücke (30, 31) bzw. (30', 31') und durch das dazu nach außen abgebogene, eine Schlauchtülle aufweisende äußere Rohrstück (33) bzw. (33') begünstigt. Das Gehäuse der Steckdose als auch des Steckers wird ebenfalls vorzugsweise aus Polycarbonat gebildet.

Im Gegensatz zu den Y-förmig abgewinkelten Fluid-/Gas-Kupplungsteilen (8,9) sind die zusätzlichen Fluid-/Gas-Kupplungsteile (40,40') geradlinig ausgebildet und weisen einen gleichbleibenden großen Innendurchmesser auf. Die Abmessung dieser zusätzlichen Fluid-/Gas-Kupplungsteile ist größer bemessen als die der Fluid-/Gas-Kupplungsteile (8,9), da diese unmittelbar in den Aufnahmeräumen für die Hauptkontakte zu liegen kommen, welche bedeutend größer bemessen sind als die zusätzlichen unteren Längsaufnahmen (26,27) bzw. (26',27'). Es ergibt sich insofern eine erhöhte Durchflußgeschwindigkeit und ein geringerer Strömungswiderstand in den einen größeren Innendurchmesser aufweisenden Fluid-/Gas-Kupplungsteilen (40,40'). Diese sind insbesondere zum Transport von Fluiden mit größerer Viskosität geeignet.

Gemäß Figur 16 weisen diese Fluid-/Gas-Kupplungsteile (40,40') im vorderen, zu übersteckenden Abschnitt (66,66') jeweils ein Sperrventil (67,68) auf. Die Sperrventilschieber (69,70) besitzen jeweils einen nach außen ragenden Stößel (71,72). Diese Teile sind derart bemessen und angelegt, daß beim Überstecken der Kupplungsteile die Stößel (71,72) aufeinanderstoßen und aus ihrer unter Federdruck befindlichen Schließstellung sich seitlich nach innen verschieben, so daß die Ventile in Öffnungsstellung übergehen und der Übergang von Wasser aus einem Reservoir des Ladegerätes zur Batterie ohne Verlust von Batterieflüssigkeit erfolgt. Derartige Ventile können auch in die Kupplungsteile (8,9) eingebaut werden, wenn der nötige Platz vorhanden ist.

Die Kupplungsteile (40,40') weisen jeweils an einem Ende eine Schlauchtülle und an dem entgegengesetztem Ende einen buchsenförmigen Ansatz (61) oder einen stiftförmigen Ansatz (62) auf, wobei diese Ansätze zur Bildung der Fluid-/Gas-Kupplung übersteckbar sind. In der Außenwandung der rohrförmigen Fluid-/Gas-Kupplungsteile (40,40') sind sich nach außen öffnende Eingriffsausnehmungen (63,63') angelegt. Insofern ist eine Festlegung der in den Aufnahmeräumen (17c, 17c') der Steckverbindergehäuse eingesteckten Fluid-/Gas-Kupplungsteile (40,40') mittels der Arretierplatten (24, 25) möglich.

Zur Führung der Arretierplatten (24,25) ist parallel zu den Querwandungen (29, 30) quer durch die Kontaktaufnahmeteile (3,4) jeweils ein Führungsschlitz (64,65) geführt. Dabei sind zusätzlich in der dortigen Längswand (43,43') Durchlaßöffnungen (55,55') angelegt. (Figur 1, 7)

Der Führungsschlitz (64,65) geht von den Auslassungen (45,45') an der Gehäuseoberseite aus und erstreckt sich nach unten quer zu den Durchlaßöffnungen (55,55') und den die Längsaufnahmen (26,27;26',27';37,38;37',38') für die Pilotkontakte (10,11,10',11') und die Fluid-/Gas-Kupplungsteile (8,9) fortführenden, in das Gehäuse sich ansatzförmig nach oben erstreckenden Abschnitt (54,54'). Seitlich dazu läuft er jeweils vor den ein vorspringendes Wandstück bildenden Auflagerungen (56,57,58;56',57',58') aus.

### Bezugsziffernliste

| | |
|---|---|
| Steckdose | 1 |
| Stecker | 2 |
| Kontaktaufnahmeteil der Steckdose | 3 |
| Kontaktaufnahmeteil des Steckers | 4 |
| Codierstift der Steckdose bzw. des Steckers | 5,5' |
| elektrische Kontaktelemente | 6,6',6'';7,7',7'';10,11;10',11' |
| Buchsenkontakte der Steckdose | 6,6',6" |
| Stiftkontakte des Steckers | 7,7',7" |
| Fluid-/Gas-Kupplungsteile zur Bildung der Fluid-/Gas-Kupplung der Steckvorrichtung | 8,9;40,40' |
| Pilotkontakthülsen gemäß Norm | 10,11 |
| Pilotkontaktstifte gemäß Norm | 10',11' |
| Steckansatz der Steckdose | 12 |
| linker erster Steckansatzabschnitt | 12' |
| rechter zweiter Steckansatzabschnitt | 12" |
| Schutzkragen des Steckers | 13 |
| Längsaufnahme für den Codierstift der Steckdose | 14 |
| Längsaufnahme für den Codierstift des Steckers | 14' |
| Führungsnuten auf der Außenseite des Steckansatzes der Steckdose | 15,15' |
| Führungsstege auf der Innenseite des Steckers | 16,16' |
| Aufnahmeräume für die Buchsenkontakte der Steckdose | 17a,b,c |
| Aufnahmeräume für die Stiftkontakte des Steckers | 17a',b',c' |
| zusätzlicher seitlicher Teil des Schutzkragenabschnittes | 18 |
| Steckansatzstirnseite | 19 |
| Öffnungen an der Steckansatzstirnseite zu den Aufnahmeräumen | 20a,b,c |
| gemeinsame Trennwand der getrennten Schutzkragenabschnitte | 21 |
| Verschlußteil der Steckdose | 22 |
| Verschlußteil des Steckers | 23 |
| Arretierplatte des Verschlußteils der Steckdose | 24 |
| Arretierplatte des Verschlußteils des Steckers | 25 |
| Längsaufnahmen für Fluid-/Gas-Kupplungsteile | 26, 27;26',27' |
| Ausnehmung in der Arretierplatte zur Halterung des Verschlußteils durch den quer zu führenden Codierstift | 28, 28' |
| Querwandung der Rückseite des Steckansatzes bzw. des Schutzkragens zum Kontaktaufnahmeteil der Steckdose bzw. des Steckers | 29, 30 |
| Rohrstücke des Fluid-/Gas-Kupplungsteils der Steckdose | 31, 32 |
| Rohrstücke des Fluid-/Gas-Kupplungsteils des Steckers | 31', 32' |
| Rohrstück des Fluid-/Gas-Kupplungsteils der Steckdose in Richtung Zugentlastungsschelle | 33 |
| Rohrstück des Fluid-/Gas-Kontaktteils des Steckers in Richtung Zugentlastungsschelle | 33' |
| Fluid-/Gas-Anschluß der Steckdose | 34 |
| Fluid-/Gas-Anschluß des Steckers | 34' |
| Eingriffsausnehmungen in den Wandungen der beiden abgezweigten Rohrstücke der Fluid-/Gas-Kupplungsteile | 35, 36; 35', 36' |
| Aufnahmen für die Pilotkontakte gem. Norm | 37, 38; 37', 38' |
| Arretiersteg | 39,39' |
| alternative Fluid-/Gas-Kupplungsteile | 40,40' |
| Fluid-/Gas-Kanäle (Leitungskanal) | 41,41',41" |
| Öffnung an (3) bzw. (4) zum Verschnappen der Codierstifte | 42,42' |
| Längswand zwischen (17b) und (17c) bzw. (17b') und (17c') | 43,43' |
| äußere Lagerplatte des Verschlußteils der Steckdose | 44 |
| äußere Lagerplatte des Verschlußteils des Steckers | 44' |
| Auslassung an der Gehäuseoberseite von (3) bzw. (4) | 45,45' |
| Auslassungen an der Unterkante der Arretierplatte (24) bzw. (25) | 46,47,48;46',47',48' |
| Auslassungen an (24) bzw. (25) zur Halterung der Pilotkontakthülsen bzw. -stifte gemäß Norm | 49,50;49',50' |
| Ansatz der Arretierplatte (24) bzw. (25) | 51,51' |
| Ausnehmungen am Ansatz (51) bzw. (51') | 52,53;52',53' |
| Gehäuseabschnitt | 54,54' |
| Öffnung in Längswand 43,43' | 55,55' |
| haltekranzförmige Auflagerungen in (3) bzw. (4) zur Auflagerung und Festlegung der Hauptkontakte | 56,57,58;56',57',58' |
| erster Bereich des Schutzkragens | 59 |
| zweiter seitlich äußerer Bereich des Schutzkragens | 60 |
| buchsenförmiger Ansatz | 61 |
| stiftförmiger Ansatz | 62 |
| Eingriffsausnehmungen | 63,63' |
| Führungsschlitz | 64,65 |
| vorderer Abschnitt von 40,40' | 66,66' |
| Sperrventil | 67,68 |
| Sperrventilschieber | 69,70 |
| Stößel | 71,72 |

## Patentansprüche

1. Kombinierte Lade- und Fluid-/Gas-Steckvorrichtung für Elektro-Flurförderzeuge, insbesondere zum Anschließen eines Akkumulators mit Elektrolytumwälzung an eine Strom- und eine Fluidversorgungseinheit, bestehend aus einer Steckdose (1) und einem Stecker (2) mit elektrischen Kontaktelementen zum Herstellen mindestens einer elektrischen Verbindung und aus Fluid-/Gas-Kupplungsteilen zum Herstellen mindestens einer Fluid-/Gas-Kupplung,
wobei die Steckdose als Gehäuse ein Kontaktaufnahmeteil (3) mit einem Steckansatz (12) aufweist, der mehrere parallel zueinander angeordnete Buchsenkontakte (6,6') umgibt, wobei zwischen zwei der Buchsenkontakte eine Aufnahme für einen Codierstift (5) angeordnet ist und oberhalb dieser Aufnahme seitlich rechts und links auf der Außenseite des Steckansatzes zwei Führungsnuten (15, 15') sich parallel zueinander und in Steckrichtung von Stecker und Steckdose erstrecken,
und wobei der Stecker als Gehäuse ein Kontaktaufnahmeteil mit einem Schutzkragen (13) aufweist sowie mehrere parallel zueinander angeordnete Stiftkontakte (7,7'), die von einem Schutzkragen umgeben sind, dessen Innenseite mit zwei parallel zueinander angeordneten Führungsstegen (16,16') versehen ist, die so bemessen sind, daß die Außenkonturen von den Führungsstegen im gesteckten Zustand von Steckdose und Stecker, in dem der Schutzkragen (13) des Steckers (2) den Steckansatz (12) der Steckdose (1) umschließt, in die Führungsnuten eingreifen, wobei zwischen zwei der Stiftkontakte eine Aufnahme für einen mit dem Codierstift der Steckdose zu übersteckenden Codierstift angelegt ist,
**dadurch gekennzeichnet, daß**
der Steckansatz (12) mindestens zwei parallel zueinander angeordnete Buchsenkontakte (6,6') und zwei Aufnahmeräume (17a,b) dafür in einem ersten Steckansatzabschnitt (12') sowie zumindest einen zu diesen Aufnahmeräumen seitlich parallel verlaufenden dritten Aufnahmeraum (17c) in einem seitlich äußeren getrennten zweiten Steckansatzabschnitt (12") für einen dritten, zu den beiden ersten Buchsenkontakten (6,6') parallelen, auswechselbaren Buchsenkontakt (6") aufweist
sowie drei Öffnungen (20a,b,c) an der Steckansatzstirnseite (19), von denen jeweils eine zu einem der drei Aufnahmeräume (17a,b,c) führt und zum Einbringen jeweils eines Stiftkontaktes (7,7',7") des Steckers (2) dient,
und daß die beiden Steckansatzabschnitte (12',12") zum Kontaktaufnahmeteil (3) ein gemeinsames Steckdosengehäuseteil bilden,
daß der Stecker (2) mindestens zwei oder drei beabstandete, auswechselbare zueinander parallele, bis in den Schutzkragen (13) ragende Stiftkontakte (7,7',7") aufweist und daß der Schutzkragen (13) zwei Abschnitte (59,60) besitzt, nämlich einen ersten Schutzkragenabschnitt (59) und einen zweiten, von diesem getrennten, seitlich äußeren Abschnitt (60) zur Aufnahme des seitlich äußeren getrennten Steckansatzabschnittes (12"),
wobei der erste Schutzkragenabschnitt (59) zur Aufnahme des Steckansatzabschnittes (12') mit den Aufnahmeräumen (17a,b) für die zwei ersten, parallel zueinander angeordneten Buchsenkontakte (6,6') im gesteckten Zustand dient,
und daß die beiden Schutzkragenabschnitte (59,60) zum Kontaktaufnahmeteil (4) ein gemeinsames Steckergehäuseteil bilden, wobei im dritten Aufnahmeraum (17c) und äußeren Abschnitt (60) jeweils ein Buchsenkontakt oder ein stiftkontakt eines dritten Hauptkontaktes aufgenommen oder auch alternativ ein zusätzliches Fluid-/Gas-Kupplungsteil aufnehmbar ist.

2. Kombinierte Lade- und Fluid-/Gas-Steckvorrichtung nach Anspruch 1,
**dadurch gekennzeichnet, daß**
der Abschnitt (12') des Steckansatzes (12) zur Aufnahme von zwei parallelen Buchsenkontakten (6,6') zu dem seitlich äußeren Abschnitt (12") des dritten Buchsenkontaktes (6") derart weit beabstandet ist, daß zusätzlich eine Übersteckung mit dem Schutzkragen einer Steckvorrichtung für Elektro-Flurförderzeuge für lediglich zwei parallele Stiftkontakte möglich ist.

3. Kombinierte Lade- und Fluid-/Gas-Steckvorrichtung nach Anspruch 1 oder 2,
**dadurch gekennzeichnet, daß**
der Schutzkragen (13) zur Aufnahme von drei parallelen, zueinander beabstandeten Stiftkontakten (7,7',7'') einen Abschnitt mit einem gemeinsamen ersten Bereich (59) für zwei Stiftkontakte (7,7') aufweist sowie einen zweiten Bereich (60) zur Aufnahme des zusätzlichen dritten parallelen Stiftkontaktes (7"), wobei die Wandung dieser Abschnitte im Bereich seitlich zueinander ineinander übergeht und eine gemeinsame Trennwand (21) für beide Bereiche (59,60) gebildet wird.

4. Kombinierte Lade- und Fluid-/Gas-Steckvorrichtung nach Anspruch 2 oder 3,
**dadurch gekennzeichnet, daß**
der Abschnitt (12') des Steckansatzes (12) und/oder der erste Bereich (59) des Schutzkragens (13) Abmessungen gemäß DIN 43589-1 für Elektro-Flurförderzeuge aufweisen.

5. Kombinierte Lade- und Fluid-/Gas-Steckvorrichtung nach einem der Ansprüche 1 - 4,
**dadurch gekennzeichnet, daß**
die Steckdose (1) sowie der Stecker (2) zusätzlich jeweils mindestens zwei parallele Kontaktelemente (10,11;10',11') zur Bildung von elektrischen Pilotkontakten aufweisen sowie jeweils zwei beabstandete parallele Aufnahmen (37,38;37',38') zwischen den Aufnahmeräumen (17a,b;17'a,b) der Hauptkontakte zur Lagerung dieser Pilotkontakte.

6. Kombinierte Lade- und Fluid-/Gas-Steckvorrichtung nach einem der Ansprüche 1 - 5,
**dadurch gekennzeichnet, daß**
die Fluid-/Gas-Kupplungsteile (8,9;40,40') zur Bildung der jeweils in der Steckdose (1) und dem Stecker (2) integrierten Fluid-/Gas-Kupplung im Gehäuse dieser Steckverbinder (1,2) oder in den Führungsstegen (16,16') des Schutzkragens (13) oder den Führungsnuten (15,15') des Steckansatzes (12) angeordnet sind und sich bis in den äußeren Bereich des Steckansatzes (12) oder des Schutzkragens (13) erstrecken.

7. Kombinierte Lade- und Fluid-/Gas-Steckvorrichtung nach einem der Ansprüche 1 - 6,
**dadurch gekennzeichnet, daß**
im Kontaktaufnahmeteil (3,4) der Steckdose und des Steckers jeweils in Längsrichtung ober- oder unterhalb der Aufnahmen des Codierstiftes (5,5') und der Pilotkontakte (10,11;10',11') zumindest eine zusätzliche Längsaufnahme (26,27;26',27') angelegt ist, welche sich vom Innern des Kontaktaufnahmeteils (3,4) bis zur äußeren Stirnseite des Steckansatzes der Steckdose oder bis zum Übergang im Kontaktaufnahmeteil (4) des Steckers zum Schutzkragen (13) erstreckt, und daß in diesen Längsaufnahmen (26,27;26',27') ein rohrförmiges Fluid-/Gas-Kupplungsteil (8,9) mit zumindest einem inneren Leitungskanal (41,41',41") lösbar einsteckbar ist und mit einem äußeren Fluid-/Gas-Anschluß (34,34') im Steckansatz der Steckdose oder im Innern des Schutzkragens des Steckers mündet, und daß dabei die Fluid-/Gas-Anschlüsse (34,34') beim Überstecken der Steckverbinder zueinander ausgerichtet sind, so daß diese untereinander übersteckbar sind.

8. Kombinierte Lade- und Fluid-/Gas-Steckvorrichtung nach Anspruch 7,
**dadurch gekennzeichnet, daß**
zwei zusätzliche untere Aufnahmen (26,27;26',27') angelegt und im Inneren des Kontaktaufnahmeteils (3,4) in einem Lageransatz (64) der Gehäusewandung zwischen und/oder unterhalb der Aufnahmeräume der Hauptkontakte (1,2) und Aufnahmen der Pilotkontakte (10,11;10',11') fortgeführt sind, welcher sich von der inneren Gehäusequerwandung (29,30) der Steckverbinder durch das Innere des Kontaktaufnahmeteils (3,4) erstreckt.

9. Kombinierte Lade- und Fluid-/Gas-Steckvorrichtung nach einem der Ansprüche 1 - 8,
**dadurch gekennzeichnet, daß**
über das Kontaktaufnahmeteil (3,4) bis in die unteren zusätzlichen Längsaufnahmen (26,27;26',27') ein Fluid-/Gas-Kupplungsteil (8,9) angelegt ist.

10. Kombinierte Lade- und Fluid-/Gas-Steckvorrichtung nach einem der Ansprüche 1 - 9,
**dadurch gekennzeichnet, daß**
die einen inneren Leitungskanal (41,41',41") aufweisenden länglichen Fluid-/Gas-Kupplungsteile (8,9) aus zwei länglichen, parallel im Abstand zueinander verlaufenden; in die unteren Längsaufnahmen (26,27;26',27') einsteckbaren Rohrstücken (31,32;31',32') und aus einem mit diesen Y-förmig abgewinkelten, zum Ende des Kontaktaufnahmeteils (3,4) auslaufenden Rohrstück (33,33') bestehen, wobei dieses in einer äußeren Schlauchtülle (24,26) zum Anschluß an eine Druckluft- oder Fluidversorgungseinheit oder die zu wartende Batterie ausläuft.

11. Kombinierte Lade- und Fluid-/Gas-Steckvorrichtung nach einem der Ansprüche 1 - 10,
**dadurch gekennzeichnet, daß**
der Fluid-/Gas-Anschluß (34) des in die untere Längsaufnahme (26,27) der Steckdose einsteckbaren Fluid-/Gas-Kupplungsteils (8) zwei buchsenförmige Ansätze aufweist und der Fluid-/Gas-Anschluß (34') des in die Aufnahme (26',27') des Steckers einsteckbaren Fluid-/Gas-Kupplungsteils (9) zwei stiftförmige Ansätze, wobei diese mit den buchsenförmigen Ansätzen übersteckbar sind.

12. Kombinierte Lade- und Fluid-/Gas-Steckvorrichtung nach einem der Ansprüche 1 - 11,
**dadurch gekennzeichnet, daß**
die Fluid-/Gas-Kupplungsteile (8,9) in den Wandungen ihrer in die Längsaufnahmen (26,27;26',27') einsteckbaren Abschnitte sich nach außen öffnende Eingriffsausnehmungen (35,36) aufweisen.

13. Kombinierte Lade- und Fluid-/Gas-Steckvorrichtung nach einem der Ansprüche 7 - 11,
**dadurch gekennzeichnet, daß**
die Eingriffsausnehmungen (35,36) der eingesteckten Fluid-/Gas-Kupplungsteile (8,9) unter einer in ihrem Lageransatz (64) zur Bildung eines Führungsschlitzes (65) angelegten Auslassung zu liegen kommen, wobei die Auslassung zur Oberseite des Kontaktaufnahmeteils (3,4) bis unterhalb eines dort befestigbaren Verschlußteils (22,23) sich öffnet, und daß in die Auslassung eine Arretierplatte (24,25) einsteckbar ist, welche zur Haltung der Fluid-/Gas-Kupplungsteile (8,9) in deren Eingriffsausnehmungen (35,36) eingreift.

14. Kombinierte Lade- und Fluid-/Gas-Steckvorrichtung nach einem der Ansprüche 1 - 13,
**dadurch gekennzeichnet, daß**
zu den Fluid-/Gas-Kupplungsteilen (8,9) oder statt dieser ein zusätzliches Fluid-/Gas-Kupplungsteil (40,40') vorgesehen ist, welches in einen der Aufnahmeräume (17c,17c') statt des zusätzlichen Hauptkontaktes (6",7") eingebracht ist.

15. Kombinierte Lade- und Fluid-/Gas-Steckvorrichtung nach einem der Ansprüche 1 - 14,
**dadurch gekennzeichnet, daß**
das zusätzliche Fluid-/Gas-Kupplungsteil (40,40') rohrförmig mit einem inneren Leitungskanal ausgebildet ist und an einem Ende jeweils eine Schlauchtülle und am anderen Ende einen buchsenförmigen Ansatz (61) oder einen stiftförmigen Ansatz (62) aufweist, wobei zwei Fluid-/Gas-Kupplungsteile (40,40') über zwei derartige unterschiedliche Ansätze übersteckbar sind.

16. Kombinierte Lade- und Fluid-/Gas-Steckvorrichtung nach Anspruch 15,
**dadurch gekennzeichnet, daß**
in der Außenwandung der Fluid-/Gas-Kupplungsteile (40,40') Eingriffsausnehmungen (63,63') angelegt sind, in welche zu deren Festlegung die Arretierplatte (24,25) des Verschlußteils (22,23) eingreift.

17. Kombinierte Lade- und Fluid-/Gas-Steckvorrichtung nach einem der Ansprüche 12 - 16,
**dadurch gekennzeichnet, daß**
zur Führung der Arretierplatte (24,25) des Verschlußteils (22,23) quer durch das Kontaktaufnahmeteil (3,4) im Abstand zur Querwandung (29,30) sich ein Führungsschlitz (64,65) als Längsauslassung von der Oberseite des Kontaktaufnahmeteils (3,4) bis zu einem von der Innenseite der unteren Gehäusewandung vorstehenden Wandstück (56,57,58;56',57',58') erstreckt.

18. Kombinierte Lade- und Fluid-/Gas-Steckvorrichtung nach Anspruch 17,
**dadurch gekennzeichnet, daß**
zur Bildung des Führungsschlitzes (64,65) für die Arretierplatte (24,25) in der Längswand (43,43'), welche zwischen den Aufnahmeräumen (17b,c) bzw. (17b',c') angelegt ist, eine Durchlaßöffnung (55,55') vorgesehen ist und in dem zur Führung der Längsaufnahmen (26,27;26',27') für die rohrförmigen Fluid-/Gas-Kupplungsteile (8,9) dienenden ansatzförmigen Gehäuseabschnitt (54,54') eine quer bis zu diesen Längsaufnahmen reichende Längsausnehmung sich erstreckt.

19. Kombinierte Lade- und Fluid-/Gas-Steckvorrichtung nach einem der Ansprüche 1-18,
**dadurch gekennzeichnet, daß**
die Fluid-/Gas-Kupplungsteile (8,9;40,40') zur Führung von Wasser, Batterieflüssigkeit oder anderen wässrigen oder höher viskosen Fluiden im vorderen, zu überstekkenden Abschnitt mit einem Sperrventil (67,68) versehen sind, wobei vom Sperrschieber jeweils nach außen ein Stößel (71,72) vorsteht, welche gegen Federdruck in Schließstellung gehalten sind.

20. Steckverbinder in Form einer Steckdose (1) oder eines Steckers (2) nach einem der Ansprüche 1 - 19.

## Claims

1. Combined charging and fluid/gas connecting apparatus for electric industrial trucks, in particular for connecting a battery with electrolyte circulation to a current and fluid supply unit, comprising a socket-outlet (1) and a plug (2) with electrical contact elements for establishing at least one electrical connection and comprising fluid/gas coupling parts for producing at least one fluid/gas coupling,
wherein the socket-outlet as a housing comprises a contact-receiving part (3) with a plug-in projection (12), which surrounds a plurality of jacks (6, 6') disposed parallel to one another, wherein between two of the jacks a receiver for a coding pin (5) is disposed and above said receiver laterally to the left and right at the outside of the plug-in projection two guide grooves (15, 15') extend parallel to one another and in the direction of insertion of plug and socket-outlet,
and wherein the plug as a housing comprises a contact-receiving part with a protective collar (13) as well as a plurality of pin contacts (7, 7'), which are disposed parallel to one another and surrounded by a protective collar, the inside of which is provided with two guide webs (16, 16'), which are disposed parallel to one another and so dimensioned that the external contours of the guide webs in the plugged-in state of socket-outlet and plug, in which the protective collar (13) of the plug (2) encloses the plug-in projection (12) of the socket-outlet (1), engage into the guide grooves, wherein disposed between two of the pin contacts is a receiver for a coding pin to be mated with the coding pin of the socket-outlet,
**characterized in that**
the plug-in projection (12) comprises at least two jacks (6, 6') disposed parallel to one another and two receiving spaces (17a, b) for them in a first plug-in projection portion (12') as well as at least one third receiving space (17c), which extends laterally parallel to said receiving spaces, in a laterally outer separate second plug-in projection portion (12") for a third exchangeable jack (6"), which is parallel to the first two jacks (6, 6'),
as well as three openings (20a, b, c) at the plug-in projection end (19), each of which leads to one of the three receiving spaces (17a, b, c) and is used to introduce in each case one pin contact (7, 7', 7") of the plug (2),
and that the two plug-in projection portions (12', 12") relative to the contact receiving part (3) form a common socket-outlet housing part,
that the plug (2) comprises at least two or three spaced-apart, exchangeable, mutually parallel pin contacts (7, 7', 7") projecting as far as into the protective collar (13) and that the protective collar (13) has two portions (59, 60), namely a first protective collar portion (59) and - separate from the latter - a second laterally outer portion (60) for receiving the laterally outer separate plug-in projection portion (12"),
wherein the first protective collar portion (59) is used to receive the plug-in projection portion (12') with the receiving spaces (17a, b) for the two first, mutually parallel jacks (6, 6') in the plugged-in state,
and that the two protective collar portions (59, 60) relative to the contact receiving part (4) form a common plug housing part, wherein in the third receiving space (17c) and outer portion (60) in each case a jack or a pin contact of a third main contact is received or alternatively an additional fluid/gas coupling part is receivable.

2. Combined charging and fluid/gas connecting apparatus according to claim 1,
**characterized in that**
the portion (12') of the plug-in projection (12) for receiving two parallel jacks (6, 6') is disposed at such a distance from the laterally outer portion (12") of the third jack (6") that in addition a mating with the protective collar of a connecting apparatus for electric industrial trucks for only two parallel pin contacts is possible.

3. Combined charging and fluid/gas connecting apparatus according to claim 1 or 2,
**characterized in that**
the protective collar (13) for receiving three parallel, spaced-apart pin contacts (7, 7', 7") comprises a portion having a common first region (59) for two pin contacts (7, 7') as well as a second region (60) for receiving the additional third parallel pin contact (7"), wherein the wall of said portions in the region laterally relative to one another merges one into the other and a common separating wall (21) for both regions (59, 60) is formed.

4. Combined charging and fluid/gas connecting apparatus according to claim 2 or 3,
**characterized in that**
the portion (12') of the plug-in projection (12) and/or the first region (59) of the protective collar (13) have dimensions in accordance with DIN 43589-1 for electric industrial trucks.

5. Combined charging and fluid/gas connecting apparatus according to one of claims 1 - 4,
**characterized in that**
the socket-outlet (1) as well as the plug (2) additionally comprise in each case at least two parallel contact elements (10, 11; 10', 11') for forming electrical pilot contact as well as in each case two spaced-apart parallel receivers (37, 38; 37', 38') between the receiving spaces (17a, b; 17'a, b) of the main contacts for supporting said pilot contacts.

6. Combined charging and fluid/gas connecting apparatus according to one of claims 1 - 5,
**characterized in that**
the fluid/gas coupling parts (8, 9; 40, 40') for forming the fluid/gas coupling integrated in each case in the socket-outlet (1) and the plug (2) are disposed in the housing of said connectors (1, 2) or in the guide webs (16, 16') of the protective collar (13) or the guide grooves (15, 15') of the plug-in projection (12) and extend as far as into the outer region of the plug-in projection (12) or of the protective collar (13).

7. Combined charging and fluid/gas connecting apparatus according to one of claims 1 - 6,
**characterized in that**
situated in the contact receiving part (3, 4) of the socket-outlet and of the plug in each case in longitudinal direction above or below the receivers of the coding pin (5, 5') and the pilot contacts (10, 11; 10', 11') is at least one additional longitudinal receiver (26, 27; 26', 27'), which extends from the interior of the contact receiving part (3, 4) up to the outer end of the plug-in projection of the socket-outlet or up to the transition in the contact receiving part (4) of the plug to the protective collar (13), and that in said longitudinal receivers (26, 27; 26', 27') a tubular fluid/gas coupling part (8, 9) having at least one inner duct (41, 41', 41") is releasably insertable and opens with an outer fluid/gas connection (34, 34') in the plug-in projection of the socket-outlet or in the interior of the protective collar of the plug, and that in said case the fluid/gas connections (34, 34'), when the connectors are mated, are aligned relative to one another so that the latter are intermateable.

8. Combined charging and fluid/gas connecting apparatus according to claim 7,
**characterized in that**
two additional bottom receivers (26, 27; 26', 27') are provided and continued in the interior of the contact receiving part (3, 4) in a bearing projection (64) of the housing wall between and/or below the receiving spaces of the main contacts (1, 2) and receivers of the pilot contacts (10, 11; 10', 11'), which bearing projection extends from the inner transverse housing wall (29, 30) of the connectors through the interior of the contact receiving part (3, 4).

9. Combined charging and fluid/gas connecting apparatus according to one of claims 1 - 8,
**characterized in that**
a fluid/gas coupling part (8, 9) extends through the contact receiving part (3, 4) as far as into the bottom additional longitudinal receivers (26, 27; 26', 27').

10. Combined charging and fluid/gas connecting apparatus according to one of claims 1 - 9,
**characterized in that**
the elongate fluid/gas coupling parts (8, 9) having an inner duct (41, 41', 41") comprise two elongate tubular pieces (31, 32; 31', 32'), which extend at a distance parallel to one another and are insertable into the bottom longitudinal receivers (26, 27; 26', 27'), and a tubular piece (33, 33'), which is bent with said two elongate tubular pieces into a Y shape and runs out to the end of the contact receiving part (3, 4), wherein said tubular piece (33, 33') runs out in an outer hose nozzle (24, 26) for connection to a compressed-air or fluid supply unit or to the battery to be maintained.

11. Combined charging and fluid/gas connecting apparatus according to one of claims 1 - 10,
**characterized in that**
the fluid/gas connection (34) of the fluid/gas coupling part (8) insertable into the bottom longitudinal receiver (26, 27) of the socket-outlet comprises two jack-shaped projections and the fluid/gas connection (34') of the fluid/gas coupling part (9) insertable into the receiver (26', 27') of the plug comprises two pin-shaped projections, wherein the latter are mateable with the jack-shaped projections.

12. Combined charging and fluid/gas connecting apparatus according to one of claims 1 - 11,
**characterized in that**
the fluid/gas coupling parts (8, 9), in the walls of their portions insertable into the longitudinal receivers (26, 27; 26', 27'), have outwardly opening engagement recesses (35, 36).

13. Combined charging and fluid/gas connecting apparatus according to one of claims 7 - 11,
**characterized in that**
the engagement recesses (35, 36) of the inserted fluid/gas coupling parts (8, 9) come to lie under a break provided in their bearing projection (64) so as to form a guide slot (65), wherein the break opens towards the top of the contact receiving part (3, 4) as far as below a closure part (22, 23) fastenable there, and that insertable into the break is an arresting plate (24, 25) which, for retaining the fluid/gas coupling parts (8, 9), engages into their engagement recesses (35, 36).

14. Combined charging and fluid/gas connecting apparatus according to one of claims 1 - 13,
**characterized in that**
in addition or as an alternative to the fluid/gas coupling parts (8, 9) a fluid/gas coupling part (40, 40') is provided, which is introduced into one of the receiving spaces (17c, 17c') instead of the additional main contact (6", 7").

15. Combined charging and fluid/gas connecting apparatus according to one of claims 1 - 14,
**characterized in that**
the additional fluid/gas coupling part (40, 40') is of a tubular design with an inner duct and comprises at one end in each case a hose nozzle and at the other end a jack-shaped projection (61) or a pin-shaped projection (62), wherein two fluid/gas coupling parts (40, 40') are intermateable via two such different projections.

16. Combined charging and fluid/gas connecting apparatus according to claim 15,
**characterized in that**
provided in the outer wall of the fluid/gas coupling parts (40, 40') are engagement recesses (63, 63'), into which for their fastening the arresting plate (24, 25) of the closure part (22, 23) engages.

17. Combined charging and fluid/gas connecting apparatus according to one of claims 12 - 16,
**characterized in that**
for guiding the arresting plate (24, 25) of the closure part (22, 23) transversely through the contact receiving part (3, 4) at a distance from the transverse wall (29, 30) a guide slot (64, 65) in the form of a longitudinal break extends from the top of the contact receiving part (3, 4) up to a wall piece (56, 57, 58; 56', 57', 58') protruding from the inside of the bottom housing wall.

18. Combined charging and fluid/gas connecting apparatus according to claim 17,
**characterized in that**
to form the guide slot (64, 65) for the arresting plate (24, 25), in the longitudinal wall (43, 43') situated between the receiving spaces (17b, c) and/or (17b', c') a through-opening (55, 55') is provided and in the projection-shaped housing portion (54, 54'), which is used to guide the longitudinal receivers (26, 27; 26', 27') for the tubular fluid/gas coupling parts (8, 9), a longitudinal recess extends transversely up to said longitudinal receivers.

19. Combined charging and fluid/gas connecting apparatus according to one of claims 1 - 18,
**characterized in that**
the fluid/gas coupling parts (8, 9; 40, 40') for carrying water, battery fluid or other aqueous or highly viscous fluids are provided in the front portion, which is to be mated, with a shut-off valve (67, 68), wherein projecting in each case outwards from the shut-off slide valve is a plunger (71, 72), which is held counter to spring pressure in closed position.

20. Connector in the form of a socket-outlet (1) or a plug (2) according to one of claims 1 - 19.

## Revendications

1. Dispositif combiné de charge et de connexion à un fluide/gaz pour des chariots de manutention électriques, en particulier pour le raccordement d'un accumulateur à circulation d'électrolyte à une unité d'alimentation de courant et d'alimentation de fluide, constitué par une prise de courant (1) et une prise mâle (2) comprenant des éléments de contact électrique pour l'obtention d'au moins une liaison électrique et par des éléments d'accouplement à un fluide/gaz pour l'obtention d'au moins un accouplement fluide/gaz, dans lequel la prise de courant présente, à titre de boîtier, un élément de réception de contact (3) comprenant une saillie d'enfichage (12) qui entoure plusieurs contacts à douilles disposés de manière réciproquement parallèle, un logement pour une broche de codage étant disposé entre deux contacts à douilles et deux rainures de guidage (15, 15') s'étendant au-dessus de ce logement, du côté droit et du côté gauche à l'extérieur de la saillie d'enfichage, parallèlement l'une à l'autre et dans la direction d'enfichage de la prise mâle et de la prise de courant, et dans lequel la prise mâle présente, à titre de boîtier, un élément de réception de contact comprenant un collet de protection (13), ainsi que plusieurs contacts à broches (7, 7') qui sont entourés par un collet de protection, dont le côté interne est muni de deux nervures de guidage (16, 16') disposées de manière réciproquement parallèle, qui sont dimensionnées de telle sorte que les contours externes des nervures de guidage à l'état enfiché de la prise de courant et de la prise mâle, dans lequel le collet de protection (13) de la prise mâle (2) renferme la saillie d'enfichage (12) de la prise de courant (1), viennent s'insérer dans les rainures de guidage, un logement destiné à une broche de codage, qui doit être recouverte par enfichage avec la broche de codage de la prise de courant, étant ménagé entre deux contacts à broches, **caractérisé en ce que** la saillie d'enfichage (12) présente au moins deux contacts à douilles (6, 6') disposés en position réciproquement parallèle et deux espaces de réception (17a, b) pour les derniers cités dans une première section de saillie d'enfichage (12'), ainsi qu'au moins un troisième espace de réception (17c) s'étendant parallèlement en direction latérale par rapport aux espaces de réception que l'on vient de citer, dans une deuxième section de saillie d'enfichage (12'') disposée sur le côté etxerne en étant séparée de la première section et destinée à un troisième contact à douille amovible (6'') parallèle aux deux premiers contacts à douilles (6, 6'), ainsi que trois ouvertures (20a, b, c) sur le côté frontal (19) de la saillie d'enfichage, dont une respectivement mène à un des trois espaces de réception (17a, b, c) et sert à l'insertion de respectivement un contact à broche (7, 7', 7'') de la prise mâle (2), et **en ce que** les deux sections (12', 12'') de la saillie d'enfichage, par rapport à l'élément de réception de contact (3), forment un élément de boîtier de prise de courant commun, **en ce que** la prise mâle (2) présente au moins deux ou trois contacts à broches (7, 7', 7'') amovibles, disposés à l'écart les uns des autres et en position réciproquement parallèle, qui font saillie jusque dans le collet de protection (13), et **en ce que** le collet de protection (13) présente deux sections (59, 60), plus précisément une première section de collet de protection (59) et une deuxième section (60) disposée sur le côté etxerne en étant séparée de la première section et destinée à la réception de la section de saillie d'enfichage (12''), dans lequel la première section (59) du collet de protection sert à la réception de la section (12') de la saillie d'enfichage avec les deux espaces de réception (17a, b) pour les deux premiers contacts à douilles (6, 6') disposés en position réciproquement parallèle à l'état enfiché, et **en ce que** les deux sections (59, 60) du collet de protection forment, par rapport à l'élément de réception de contact (4), un élément de boîtier de prise mâle commun, dans lequel, dans le troisième espace de réception (17c) et dans la section externe (60), est logé respectivement un contact à douille ou un contact à broche d'un troisième contact principal, ou encore en variante un élément d'accouplement de fluide/gaz supplémentaire étant à même de venir se loger dans ledit espace et dans ladite section.

2. Dispositif combiné de charge et de connexion à un fluide/gaz selon la revendication 1, **caractérisé en ce que** la section (12') de la saillie d'enfichage (12) pour la réception de deux contacts à douilles parallèles (6, 6') est disposée à ce point à l'écart de la section (12''), disposée sur le côté externe, du troisième contact à douille (6") qu'un recouvrement par enfichage avec le collet de protection d'un dispositif de connexion pour des chariots de manutention électriques est possible pour seulement deux contacts à broches parallèles.

3. Dispositif combiné de charge et de connexion à un fluide/gaz selon la revendication 1 ou 2, **caractérisé en ce que** le collet de protection (13) présente, pour la réception de trois contacts à broches parallèles (7, 7', 7''), une section comprenant une première zone commune (59) pour deux contacts à broches (7, 7'), ainsi qu'une deuxième zone (60) pour la réception du troisième contact à broche parallèle supplémentaire (7''), la paroi de ces sections forme une paroi séparation commune (21) pourr les deux zones (59, 60).

4. Dispositif combiné de charge et de connexion à un fluide/gaz selon la revendication 1 ou 2, **caractérisé en ce que** la section (12') de la saillie d'enfichage (12) et/ou la première zone (59) du collet de protection (13) présente des dimensions conformes à la norme DIN 43589-1 pour des chariots de manutention électriques.

5. Dispositif combiné de charge et de connexion à un fluide/gaz selon l'une quelconque des revendications 1 à 4, **caractérisé en ce que** la prise de courant (1) ainsi que la prise mâle (2) présentent en outre, au moins deux éléments de contacts parallèles (10, 11 ; 10', 11') pour former un contact électrique pilote, ainsi que respectivement deux logements parallèles (37, 38 ; 37', 38') à l'écart l'un de l'autre entre les espaces de réception (17a, b ; 17'a, b) des contacts principaux, pour le logement de ces contacts pilotes.

6. Dispositif combiné de charge et de connexion à un fluide/gaz selon l'une quelconque des revendications 1 à 5, **caractérisé en ce que** les éléments d'accouplement à du fluide/gaz (8, 9 ; 40, 40'), pour la formation de l'accouplement à du fluide/gaz intégré respectivement dans la prise de courant (1) et dans la prise mâle (2), sont disposés dans le boîtier de ces connecteurs multiples (1, 2) ou dans les nervures de guidage (16, 16') du collet de protection (13) ou encore dans les rainures de guidage (15, 15') de la saillie d'enfichage (12), et s'étendant jusque dans la zone externe de la saillie d'enfichage (12) ou du collet de protection (13).

7. Dispositif combiné de charge et de connexion à un fluide/gaz selon l'une quelconque des revendications 1 à 6, **caractérisé en ce que**, dans l'élément de réception de contact (3, 4) de la prise de courant et de la prise mâle, est disposé respectivement en direction longitudinale au-dessus ou en dessous des logements de la broche de codage (5, 5') et des contacts pilotes (10, 11 ; 10', 11'), au moins un logement longitudinal supplémentaire (26, 27 ; 26', 27'), qui s'étend depuis l'intérieur de l'élément de réception de contact (3, 4) jusqu'au côté frontal externe de la saillie d'enfichage de la prise de courant ou jusqu'à la transition dans l'élément de réception de contact (4) de la prise mâle au collet de protection (13), et **en ce que**, dans ces logements longitudinaux (26, 27 ; 26', 27'), peut venir s'enficher de manière amovible un élément d'accouplement à du fluide/gaz de forme tubulaire (8, 9) comprenant au moins un canal conducteur interne (41, 41', 41'') et débouche, avec un raccordement externe pour un fluide/gaz (34, 34') dans la saillie d'enfichage de la prise de courant ou à l'intérieur du collet de protection de la prise mâle, et **en ce que**, en l'occurrence, les raccordements pour un fluide/gaz (34, 34'), lors d'un recouvrement par enfichage des connecteurs multiples, sont orientés l'un vers l'autre, si bien qu'ils sont en mesure de se recouvrir l'un l'autre par enfichage.

8. Dispositif combiné de charge et de connexion à un fluide/gaz selon la revendication 7, **caractérisé en ce qu'**on établit deux logements longitudinaux inférieurs supplémentaires (26, 27 ; 26', 27') qui se prolongent à l'intérieur de l'élément de réception de contact (3, 4) dans une saillie (64) de la paroi de logement entre les espaces de réception des contacts principaux (1, 2) et/ou en dessous de ces derniers et entre les logements des contacts pilotes (10, 11 ; 10', 11') et/ou en dessous de ces derniers, saillie qui s'étend depuis la paroi transversale interne (29, 30) du logement des connecteurs multiples à travers l'intérieur de l'élément de réception de contact (3, 4).

9. Dispositif combiné de charge et de connexion à un fluide/gaz selon l'une quelconque des revendications 1 à 8, **caractérisé en ce qu'**un élément d'accouplement à un fluide/gaz (8, 9) est disposé par-dessus l'élément de réception de contact (3, 4) de façon à aboutir dans les logements longitudinaux inférieurs supplémentaires (26, 27 ; 26', 27').

10. Dispositif combiné de charge et de connexion à un fluide/gaz selon l'une quelconque des revendications 1 à 9, **caractérisé en ce que**, les éléments d'accouplement longitudinaux à un fluide/gaz (8, 9) présentant un canal conducteur interne (41, 41', 41'') sont constitués par deux éléments tubulaires longitudinaux (31, 32 ; 31', 32') s'étendant à l'écart de l'autre et en position réciproquement parallèle et qui sont aptes à s'insérer dans les logements longitudinaux inférieurs (26, 27 ; 26', 27') et par un élément tubulaire (33, 33') plié en forme de Y s'étendant jusqu'à l'extrémité de l'élément de réception de contact (3, 4), l'élément tubulaire cité en dernier lieu s'étendant dans un embout à olive externe (24, 26) à des fins de raccordement à une unité d'alimentation en air comprimé ou en fluide ou à la batterie qui doit être desservie.

11. Dispositif combiné de charge et de connexion à un fluide/gaz selon l'une quelconque des revendications 1 à 10, **caractérisé en ce que**, le raccordement à un fluide/gaz (34) de l'élément d'accouplement à un fluide/gaz (8) apte à s'insérer dans le logement longitudinal inférieur (26, 27) de la prise de courant présente deux saillies en forme de douille et le raccordement à un fluide/gaz (34') de l'élément d'accouplement à un fluide/gaz (9) apte à s'insérer dans le logement (26', 27') de la prise mâle présente deux saillies en forme de broche, ces dernières étant à même d'être recouvertes par enfichage par les saillies en forme de douilles.

12. Dispositif combiné de charge et de connexion à un fluide/gaz selon l'une quelconque des revendications 1 à 11, **caractérisé en ce que**, les éléments d'accouplement à un fluide/gaz (8, 9) présentent, dans les parois de leurs sections aptes à s'insérer dans les logements longitudinaux (26, 27 ; 26', 27'), des évidements d'engrènement (35, 36) s'ouvrant vers l'extérieur.

13. Dispositif combiné de charge et de connexion à un fluide/gaz selon l'une quelconque des revendications 7 à 11, **caractérisé en ce que**, les évidements d'engrènement (35, 36) des éléments d'accouplement à un fluide/gaz (8, 9) à l'état enfiché aboutissent en dessous d'une sortie ménagée dans une saillie de logement (64) pour la formation d'une fente de guidage (65), la sortie s'ouvrant en direction du côté supérieur de l'élément de réception de contact (3, 4) jusqu'en dessous d'un élément de fermeture (22, 23) qui peut être fixé à cet endroit, et **en ce qu'**une plaque d'arrêt (24, 25) peut venir s'insérer dans la sortie, la plaque d'arrêt venant s'engrener, pour le maintien des éléments d'accouplement à un fluide/gaz (8, 9), dans les évidements d'engrènement (35, 36) de ces derniers.

14. Dispositif combiné de charge et de connexion à un fluide/gaz selon l'une quelconque des revendications 1 à 13, **caractérisé en ce qu'**on prévoit, en plus des éléments d'accouplement à un fluide/gaz (8, 9) ou au lieu de ces derniers, un élément d'accouplement supplémentaire à un fluide/gaz (40, 40') qui vient se loger dans un des espaces de réception (17c, 17c'), à la place du contact principal supplémentaire (6'', 7'').

15. Dispositif combiné de charge et de connexion à un fluide/gaz selon l'une quelconque des revendications 1 à 14, **caractérisé en ce que** l'élément d'accouplement supplémentaire à un fluide/gaz (40, 40') est réalisé sous une forme tubulaire avec un canal conducteur interne et présente, à une extrémité, une saillie en forme de douille (61) ou une saillie en forme de broche (62), deux éléments d'accouplement à un fluide/gaz (40, 40') pouvant être recouverts par enfichage par deux saillies différentes de ce type.

16. Dispositif combiné de charge et de connexion à un fluide/gaz selon la revendication 5, **caractérisé en ce qu'**on établit, dans la paroi externe des éléments d'accouplement à un fluide/gaz (40, 40'), des évidements d'engrènement (63, 63') dans lesquels vient s'engrener, pour la fixation des premiers cités, la plaque d'arrêt (24, 25) de l'élément de fermeture (22, 23).

17. Dispositif combiné de charge et de connexion à un fluide/gaz selon l'une quelconque des revendications 12 à 16,
**caractérisé en ce que**, pour le guidage de la plaque d'arrêt (24, 25) de l'élément de fermeture (22, 23), une fente de guidage (64, 65) s'étend en direction transversale à travers l'élément de réception de contact (3, 4) à l'écart de la paroi transversale (29, 30), sous la forme d'un évidement longitudinal, depuis le côté supérieur de l'élément de réception de contact (3, 4) jusqu'à un élément de paroi (56, 57, 58 ; 56', 57', 58') faisant saillie par rapport au côté interne de la paroi de logement inférieure.

18. Dispositif combiné de charge et de connexion à un fluide/gaz selon la revendication 17, **caractérisé en ce qu'**on prévoit, pour la formation de la fente de guidage (64, 65) destinée à la plaque d'arrêt (24, 25) dans la paroi longitudinale (43, 43') qui est disposée entre les espaces de réception (17b, c) respectivement (17b', c'), une ouverture de passage (55, 55') et un évidement longitudinal qui s'étend en direction transversale jusqu'à aboutir à ces évidements longitudinaux, dans la section de logement (54, 54') en forme de saillie servant au guidage des logements longitudinaux (26, 27 ; 26', 27') pour les éléments accouplement tubulaires à un fluide/gaz (8, 9).

19. Dispositif combiné de charge et de connexion à un fluide/gaz selon l'une quelconque des revendications 1 à 18, **caractérisé en ce que** les éléments d'accouplement à un fluide/gaz (8, 9 ; 40, 40'), pour le guidage de l'eau, du liquide de batterie ou d'autres fluides aqueux ou très visqueux, sont équipés d'une soupape de non-retour (67, 68) dans la section qui doit être recouverte par enfichage, dans lequel un poussoir (71, 72) fait respectivement saillie vers l'extérieur par rapport à l'obturateur, les poussoirs étant maintenus dans la position de fermeture à l'encontre de la pression exercée par le ressort.

20. Connecteur multiple sous forme d'une prise de courant (1) ou d'une prise mâle (2) selon l'une quelconque des revendications 1 à 19.
